# EUROPÄISCHE PATENTANMELDUNG

(11) **EP 1 935 486 A1**
(43) Veröffentlichungstag der Anmeldung: **25.06.2008**
(21) Anmeldenummer: 07120435.8
(22) Anmeldetag: 12.11.2007
(51) Int. Cl.: B01J 19/32, B01J 10/00, B01D 3/00, B01D 53/18

(54) **Verfahren zur Aufarbeitung eines Stoffgemisches**

(30) Priorität: 23.11.2006 EP 06124656
(71) Anmelder: BASF SE, 67056 Ludwigshafen (DE)
(72) Erfinder: Jödecke, Michael, 67240, Bobenheim-Roxheim (DE); Schuch, Gunter, 67071, Ludwigshafen (DE); Löning, Jan-Martin, 67251, Freinsheim (DE); Shilkin, Alexey, 67067, Ludwigshafen (DE)

(57) **Zusammenfassung**

Verfahren zur Aufarbeitung eines Stoffgemisches in einer Kolonne, wobei man eine Drahtgitterpackung im Innern der Kolonne einsetzt, welche senkrecht angeordnete Drähte aufweist, an denen eine Flüssigkeit im Schwerefeld nach unten läuft und mit einem Gasstrom in entgegengesetzter Richtung in Kontakt gebracht wird, wobei man den Druck in der Kolonne am Kolonnenkopf auf einen Wert kleiner als 300 mbar einstellt.

## Beschreibung

Die vorliegende Erfindung beschreibt ein verbessertes Verfahren zur Aufarbeitung eines Stoffgemisches in einer Kolonne.

In Kolonnen werden beispielsweise Destillationsverfahren, Rektifikationsverfahren, Absorptionsverfahren, Desorptionsverfahren und Strippverfahren durchgeführt, bei denen eine flüssige und eine dampfförmige Phase im Gegenstrom aneinander vorbeigeführt werden und ein Stoffaustausch zwischen den beiden Phasen stattfindet. Die verwendeten Stoffaustauschapparate nennt man Kolonnen. Der Stoffaustausch zwischen der Flüssigkeit und dem Dampf findet an der Grenzfläche der beiden Phasen statt. Um diese Grenzfläche zu erhalten und zu maximieren, werden trennwirksame Einbauten in den Kolonnen eingesetzt, wie z. B. Stoffaustauschböden, ungeordnete Füllkörper oder geordnete Packungen. Unter geordneten Packungen versteht man geometrische Anordnungen aus geformten Blech- und Gewebebahnen, die fest im Stoffaustauschapparat angeordnet sind. Die Packungen zeichnen sich durch eine große spezifische Stoffaustauschfläche und gleichzeitig einen niedrigen Druckverlust aus. Durch die Geometrie der Packung können die spezifische Stoffaustauschfläche und der Druckverlust der Packung gezielt verändert werden und entsprechend der gewünschten Trennaufgabe angepasst werden.

Ein neuer Typ von strukturierten Packungen zum Einsatz in Kolonnen sind sogenannte Drahtgitterpackungen. Diese Drahtgitterpackungen werden z. B. seit einiger Zeit unter den Bezeichnungen "X-Pack", "Super-X-Pack" oder "eXact-Pack" z. B. von Packungsherstellern wie der ReaktionsTechnik Manteufel AG (RTM AG) Bad Harzburg angeboten. Diese Packungen unterscheiden sich von herkömmlichen strukturierten Packungen dadurch, dass der Stoffaustausch nicht mehr an ebene Flächen stattfindet, z. B. an Blechbahnen bei Blechpackungen oder an Gewebebahnen aus Drahtgeweben bei Gewebepackungen, sondern an einzelnen, runden Drähten, die gleichmäßig strukturiert angeordnet sind. Diese Drähte verlaufen im wesentlichen vertikal in der Kolonne und können gerade verlaufen oder untereinander verdrillt sein. Durch geeignete konstruktive Maßnahmen, wie z. B. waagerecht verlaufende Drähte oder Verschraubungen oder Abstandshalter jeglicher Form werden die Drähte zueinander fest auf Abstand gehalten und bekommen eine Struktur. Auf diese Art und Weise erhält man eine strukturierte Packung, die aus einzelnen vertikalen Drähten aufgebaut ist und Drahtgitterpackung genannt wird. Drahtgitterpackungen stellen einen speziellen Typ von strukturierten Packungen dar.

Beschrieben werden Packungen dieser Art z. B. in der einschlägigen Literatur und in verschiedenen Patenten. In folgenden Literaturstellen werden Drahtgitterpackungen beschrieben: Hirofumi Chinju, Kazunori Uchiyama, Yasuhiko H. Mori, ""String-of-Beads" Flow of Liquids on Vertical Wires for Gas Absorption", AIChE Journal, May 2000, Vol. 46, No. 5; Kazunori Uchiyama, Hirofumi Migita, Ryo Ohmura, Yasuhiko H. Mori, "Gas absortion into "string-of-beads" liquid flow with chemical reaction: application to carbon dioxide separation", International Journal of Heat and Mass Transfer 46, 2003; Hirofumi Migita, Kohei Soga, Yasuhiko H. Mori, "Gas Absorption in a Wetted-Wire Column", AIChE Journal, August 2005, Vol. 51, No. 8.

Neben den Beschreibungen in der Literatur finden sich auch verschiedene Patente, in denen Packungen dieser Art erwähnt werden. Beispielhaft zu nennen sind die Patente EP 1 155 739 A (T. Nagoaka et. al.), US 3 083 952 A (A. M. Goodloe et. al.), GB 1 363 523 A (Simon Lefebvre), DE 100 51 523 A (R. Manteufel), US 2 490 079 A (F. L. Melvill), WO 01 28648 A (R. P. C. Manteufel), WO 01 87448 A (R. P. C. Manteufel) und EP 1 323 467 A1 (R. P. C. Manteufel).

Das Funktionsprinzip von Drahtgitterpackungen erklärt sich wie folgt: Die Flüssigkeit wird oberhalb der Packung in der Kolonne durch einen geeigneten Flüssigkeitsverteiler auf die Drahtgitterpackung aufgegeben. Die Aufgabe erfolgt dabei so, dass die oberen Drahtenden direkt mit dem Flüssigkeitsverteiler verbunden sind und die Flüssigkeit direkt aus dem Flüssigkeitsverteiler auf die Drähte läuft. Die Entstehung von freien Flüssigkeitstropfen im Gasgegenstrom wird dadurch vermieden. Die Flüssigkeit läuft dann als Film an den Drähten herunter, dabei tritt die Flüssigkeit in Kontakt mit der aufsteigenden Dampfphase in der Kolonne und der Stoffaustausch zwischen beiden Phasen findet statt. Die Drähte der Drahtgitterpackungen enden üblicherweise am unteren Ende der Kolonne in einem Flüssigkeitssammler, in dem die Flüssigkeit aufgefangen und in den Sumpf der Kolonne oder aus der Kolonne geleitet wird.

Allgemein erweist sich die Aufarbeitung von Stoffgemischen in Kolonnen in manchen Fällen als verfahrenstechnisch aufwändig. Dies ist insbesondere bei temperaturempfindlichen Stoffen der Fall, da hier die Kolonne nur bei relativ niedrigen Drücken betrieben werden kann. Unter temperaturempfindlichen Stoffen sind hierbei Stoffe zu verstehen, die Ihre physikalischen und chemischen Eigenschaften bei Erhitzung über eine bestimmte Temperatur verändern. So kann es z. B. passieren, dass bei organischen Verbindungen Teile der Moleküle abgespalten werden und dadurch Nebenkomponenten entstehen. Diese Nebenkomponenten beeinflussen die Produktqualität und führen unter Umständen zu nicht spezifikationsgerechten Produkten. Zu hohe Temperaturen können auch Folgereaktionen in den Stoffgemischen auslösen, bei denen die Komponenten in der Mischung zu anderen Produkten weiterreagieren. Auch dadurch können Produktspezifikationen nicht eingehalten werden. Nichtspezifikationsgerechte Produkte können dabei Produkte sein, bei denen aufgrund einer zu hohen thermischen Belastung die Zusammensetzung verändert wird, Farbzahl oder Geruch verändert werden oder andere physikalische Eigenschaften verändert sind. In der Regel sind unter temperaturempfindlichen Stoffen hierbei solche zu verstehen, welche nicht über eine Temperatur von 200°C, bevorzugt 160°C erwärmt werden dürfen, damit die vorstehend genannten Schwierigkeiten vermieden werden.

Die Absenkung des Druckes in einer Kolonne ist erforderlich, um eine bestimmte Temperatur im Sumpf der Kolonne nicht zu überschreiten. Die Temperatur im Sumpf der Kolonne wird durch das zu destillierende Stoffgemisch, den Kopfdruck der Kolonne und den Druckverlust der Kolonneneinbauten bestimmt. Es wird üblicherweise angestrebt, die Temperatur im Sumpf von Kolonnen niedrig zu halten. Dadurch wird der erforderliche Aufwand zum Verdampfen der Stoffe im Sumpf der Kolonne reduziert. Außerdem wird die thermische Belastung auf die Stoffe im Sumpf der Kolonne verringert, was sich unter Umständen positiv auf die Produktqualität auswirkt.

Bisher wurden solche temperaturempfindlichen Stoffgemische so aufgearbeitet, dass der Druck im Sumpf der Kolonne, der sich als Summe des Kopfdruckes der Kolonne und dem Druckverlust der Kolonneneinbauten ergibt, einen Wert nicht überschreitet, bei dem eine Temperatur im Sumpf der Kolonne auftreten würde, die negative Einflüsse auf die Qualität der Stoffe im Sumpf der Kolonne hätte. Die Möglichkeiten dafür sind die Absenkung des Druckes im Kopf der Kolonne und die Verwendung von Kolonneneinbauten mit geringem Druckverlust. Zur Absenkung des Kopfdruckes der Kolonne sind in der Regel Vakuumeinheiten in den Anlagen erforderlich. Diese Vakuumeinheiten bedeuten einen zusätzlichen Aufwand und erhöhen die Anlagekosten. Je niedriger der Druck in der Kolonne abgesenkt werden soll, umso höher sind die Anforderungen an die Vakuumeinheit und umso aufwendiger und teurer wird die Vakuumeinheit. Den Druckverlust von Kolonneneinbauten kann man reduzieren, indem man den Durchmesser einer Kolonne vergrößert. Dies hat jedoch den Nachteil, dass sowohl die Kolonne teurer wird als auch die Kosten für die Kolonneneinbauten steigen würden. Der Aufwand für eine Flüssigkeitsverteilung auf die Packung in einem größeren Kolonnenquerschnitt würde ebenfalls zunehmen.

Demgemäss stellte sich die Aufgabe ein Aufarbeitungsverfahren zu finden, welche die genannten Nachteile vermeidet und das eine verfahrenstechnisch einfache und wirtschaftliche Art und Weise der Aufarbeitung bietet. Unter Aufarbeitung versteht man hierbei die Anreicherung einer Komponente eines Stoffgemisches in der flüssigen oder dampfförmigen fluiden Phase. Diese Aufarbeitung kann dabei soweit gehen, dass die aufgearbeitete Komponente in der jeweiligen Phase in vollständiger Reinheit vorliegt. Man spricht dann von einer Aufkonzentrierung, wenn die Konzentration der Komponente in der entsprechenden Phase zunimmt. Von einer Abreicherung wird gesprochen, wenn die Konzentration der Komponente in der entsprechenden Phase abnimmt. Die Abreicherung kann dabei soweit gehen, dass von der Komponente nichts mehr in der Phase vorhanden ist.

Es wurde ein Verfahren zur Aufarbeitung eines Stoffgemisches in einer Kolonne gefunden, welches dadurch gekennzeichnet ist, dass man eine Drahtgitterpackung im Innern der Kolonne einsetzt, welche senkrecht angeordnete Drähte aufweist, an denen eine Flüssigkeit im Schwerefeld nach unten läuft und mit einem Gasstrom in entgegengesetzter Richtung in Kontakt gebracht wird, wobei man den Druck in der Kolonne am Kolonnenkopf auf einen Wert kleiner als 300 mbar einstellt.

Es wurde herausgefunden, dass die Drahtgitterpackungen aufgrund ihrer Packungsgeometrie gegenüber herkömmlichen Packungen wie zum Beispiel strukturierten Blechpackungen oder strukturierten Gewebepackungen oder auch Füllkörpern Besonderheiten aufweisen, welche sich beim Einsatz in dem erfindungsgemäßen Verfahren als vorteilhaft erweisen.

Durch die Verhinderung der Entstehung von freien Flüssigkeitstropfen in der Drahtgitterpackung beim Übergang der Flüssigkeit vom Flüssigkeitsverteiler auf die Drähte der Packung kann die Gasbelastung in der Kolonne bei der Ausführung des erfindungsgemäßen Verfahrens wesentlich höher als bei herkömmlichen Kolonneneinbauten, wie Böden, Füllkörpern, Blechpackungen oder Gewebepackungen, sein. Hydraulische Untersuchungen der Drahtgitterpackungen zeigen, dass eine Gasbelastung möglich ist, die weit über den üblichen Gasbelastungen liegt. In Abhängigkeit von dem eingesetzten Stoffgemisch und den bisher verwendeten Kolonneneinbauten ist eine deutliche Steigerung der Gasbelastung um bis zu etwa 100% im Vergleich zu bisher eingesetzten Packungen und mehr möglich. Als Maß für die Gasbelastung einer Kolonne wird üblicherweise der F-Faktor verwendet. Der F-Faktor errechnet sich aus dem Produkt der Gasgeschwindigkeit in der Kolonne, bezogen auf den leeren Kolonnenquerschnitt, und der Quadratwurzel der Gasdichte. Der F-Faktor wird in der Einheit Pa^{0,5} angegeben. Bei üblichen Kolonneneinbauten, wie z. B. strukturierten Blech- oder Gewebepackungen, können in den Apparaten in Abhängigkeit vom eingesetzten Stoffsystem, dem Druck der Kolonne und der Flüssigkeitsbelastung der Packung üblicherweise F-Faktoren bis 4 Pa^{0,5} erreicht werden. Durch den Einsatz von Drahtgitterpackungen können die Kolonnen je nach Stoffgemisch und Druck in der Kolonne dagegen bis F-Faktoren von etwa 6 Pa^{0,5} bis 8 Pa^{0,5} betrieben werden, bevor ein Verlust der Funktionstüchtigkeit der Kolonne auftritt.

Stofftrennapparate zur Durchführung des erfindungsgemäßen Verfahrens, die mit Drahtgitterpackungen ausgerüstet werden, können daher mit geringeren Abmessungen, z. B. kleinerem Durchmesser, gefertigt werden als Apparate mit herkömmlichen Einbauten, die eine gleiche Kapazität oder einen gleichen Gasdurchsatz ermöglichen sollen.

Für das erfindungsgemäße Verfahren können allgemein bekannte Drahtgitterpackungen eingesetzt werden. Die Geometrie der Drähte ermöglicht eine große spezifische Oberfläche der Packung, welche eine Intensivierung des Stoffaustausches ermöglicht. Durch Variation der Drahtdurchmesser und der Drahtabstände kann die spezifische Oberfläche der Drahtgitterpackung und damit die Stoffaustauschfläche und dadurch wiederum die Trennwirkung der Packung variiert werden. Dadurch können Drahtgitterpackungen für jegliche Art der erfindungsgemäßen Aufarbeitung (Stofftrennung), z. B. bei Destillation, Rektifikation, Absorption, Desorption oder Strippung eingesetzt werden. Welche konkrete Ausgestaltung sich hier jeweils besonders empfiehlt, hängt von dem jeweiligen Stoffsystem sowie von den Vorgaben hinsichtlich der gewünschten Aufarbeitung ab und kann in Kenntnis dieser Informationen vom Fachmann durch Routineversuche ermittelt werden. Die Drähte der Drahtgitterpackungen sind dabei bevorzugt im wesentlichen senkrecht angeordnet, besonders bevorzugt sind sämtliche Drähte senkrecht angeordnet. Die Drähte können dabei einzeln senkrecht nach unten geführt werden oder einzelne Drähte können auch zu zweit oder mehreren Drähten miteinander verdrillt sein. Der Drahtdurchmesser variiert dabei üblicherweise von etwa 0,3 bis 3 mm, bevorzugt sind Drahtdurchmesser von 0,5 bis 1,5 mm. Die einzelnen senkrecht angeordneten Drähte haben in der Regel einen Abstand zueinander von 5 bis 30 mm, bevorzugt 5 bis 15 mm. Die Drähte können sowohl in Dreiecks- wie in Vierecksteilung angeordnet sein.

Durch die senkrechte Anordnung der Drähte weisen Drahtgitterpackungen eine große freie Querschnittsfläche für die Gasströmung auf. Der Widerstand der Packung auf die Gasströmung, die durch die Packung strömt, ist somit gering. Dadurch ist der Druckverlust dieser Art von Packungen sehr viel geringer als bei herkömmlichen Blech- und Gewebepackungen. Somit eignen sich diese Art von Packungen besonders zum Einsatz bei Destillationen und Rektifikationen, die bei niedrigen Drücken durchgeführt werden, z. B. bei Kopfdrücken in den Apparaten, die kleiner als 300 mbar, bevorzugt kleiner als 100 mbar, besonders bevorzugt kleiner als 50 mbar sind. Mit Verringerung des Kopfdruckes in der Kolonne nehmen gleichzeitig die Gasbelastungen in der Kolonne zu, je niedriger der Druck in der Kolonne ist, desto höher ist üblicherweise die Gasbelastung. Auch dadurch empfiehlt sich der Einsatz von Drahtgitterpackungen bei niedrigen Drücken besonders.

Wenn die Kolonneneinbauten so wie die Drahtgitterpackungen einen besonders niedrigen Druckverlust aufweisen, kann der Kopfdruck in der Kolonne angehoben werden, ohne dass der Druck im Sumpf der Kolonne, im Vergleich zur Verwendung herkömmlicher Kolonneneinbauten, ansteigt. Ein höherer absoluter Kopfdruck in der Kolonne bedeutet einen reduzierten Aufwand für die Erzeugung des Vakuums in der Kolonne. Gleichzeitig steigt die Kapazität der Kolonne, weil durch die Erhöhung des Kopfdruckes die Gasbelastung auf die Einbauten in der Kolonne sinkt. Ein höherer Druck in der Kolonne reduziert somit bei Destillationsverfahren die Investitionskosten. Unter diesem Aspekt sollte grundsätzlich ein höherer Kopfdruck gewählt werden. Durch den Einsatz von Drahtgitterpackungen können daher die Investitionskosten gesenkt werden.

Beispiele für Destillationsverfahren, die bei niedrigen Drücken durchgeführt werden, gibt es eine Vielzahl. Für alle diese Beispiele können durch den erfindungsgemäßen Einsatz von Drahtgitterpackungen die Investitionskosten für die Kolonne gesenkt werden und es werden verfahrenstechnisch einfache und wirtschaftliche Verfahren zur Aufarbeitung möglich.

Besonders eignet sich das erfindungsgemäße Verfahren beispielsweise für die Herstellung von Methyldüsocyanat. In diesem Verfahren wird das Methyldiisocyanat von den Schwersiedern, die bei der Synthese entstehen, in einer Destillationskolonne bei einem Kopfdruck niedriger als 10 mbar abgetrennt. Im gleichen Verfahren wird Anilin vom Methylen-di-Anilin in einer Kolonne bei einem absoluten Kopfdruck unter 10 mbar abgetrennt. Für diese Destillationsschritte bietet sich der Einsatz von Drahtgitterpackungen an.

Ebenfalls bei der Herstellung von Butylglykolen wird das Produkt Butyldiglykol bei einem Kopfdruck der kleiner als 20 mbar ist vom Produkt Butyltriglykol und weiteren Schwersiedern abgetrennt.

Im Verfahren zur Herstellung von Ethanolaminen wird das Produkt Triethanolamin von den restlichen Schwersiedern in Destillationskolonnen mit Kopfdrücken kleiner als 20 mbar aufgearbeitet.

Bei der Produktion von Ethylenaminen werden die Produkte Aminoethylenethanolamin und Triethylentetramin von den Schwersiedern in Kolonnen bei Kopfdrücken kleiner als 20 mbar aufgearbeitet.

Bei der Herstellung von Chlornitrobiphenyl wird das Produkt von Leicht- und Schwersiedern in einer Kolonne bei Kopfdrücken kleiner als 5 mbar aufgearbeitet.

Im Verfahren zur Herstellung von Prenal wird das Produkt Vinylglykoldiacetat bei einem Kopfdruck kleiner als 10 mbar aufgearbeitet.

Im Verfahren zur Herstellung von Diphenyl-2,4,6-trimethylbenzoylphosphinoxid werden die Nebenprodukte Diethoxyphenylphosphin und Ethoxydiphenylphosphin bei Drücken kleiner 10 mbar aufgearbeitet.

Bei der Herstellung von Vitamin E erfolgt die Aufarbeitung des Vitamin E-Acetats bei Kopfdrücken in Kolonnen, die einen Druck unterhalb von 10 mbar haben.

Bei allen diesen als Beispiele erwähnten Destillationsverfahren kann durch den erfindungsgemäßen Einsatz von Drahtgitterpackungen anstelle der eingesetzten herkömmlichen Packungen der Kopfdruck der Kolonne erhöht werden, ohne dass ein größerer Aufwand für die Eindampfung am Sumpf der Kolonne erforderlich ist oder eine Produktschädigung durch eine zu hohe thermische Belastung auftritt. Die Investitionskosten könnten im Vergleich zum Einsatz herkömmlicher Packungen reduziert werden.

Bei Absoprtions- und Desorptionsverfahren, hier z. B. bei Kreisverfahren und Verfahren mit hohem Inertanteil im einfachen Durchgang ist ebenfalls häufig der Druckverlust der verwendeten Kolonneneinbauten entscheidend für die Kapazität und die Wirtschaftlichkeit des Verfahrens. Die Kapazität der eingesetzten Verdichter sinkt mit zunehmendem Druckverlust der nachgeschalteten Absorption. In einer weiteren Ausgestaltung der Erfindung verringert der erfindungsgemäße Einsatz von Drahtgitterpackungen in der Kolonne den Druckverlust der Absorption. Bei gleicher Kapazität kann damit ein Verdichter mit geringerer Leistung eingesetzt werden oder bei gleicher Verdichterleistung kann der Durchsatz durch die Absorption aufgrund des geringeren Druckverlustes infolge des Einsatzes einer Drahtgitterpackung reduziert werden, wodurch die Effektivität des Verfahrens gesteigert wird. Durch die Ausnutzung kinetischer Effekte und der kurzen Gaskontaktzeiten bei möglichen hohen Strömungsgeschwindigkeiten ergibt sich ein Vorteil gegenüber herkömmlichen Packungen.

Beispiele hierfür werden im folgenden genannt. Aus Kraftwerksabgasen muss Kohlendioxid, oder z. B. Schwefeldioxid oder Schwefelwasserstoff, bei möglichst niedrigen Druckverlusten abgereinigt werden. Dabei müssen z. T. sehr große Mengen- bzw. Volumenströme an Abgasen aufgereinigt werden. Durch den Einsatz einer Drahtgitterpackung im erfindungsgemäßen Verfahren können die Abgase verfahrenstechnisch einfach und wirtschaftlich aufgereinigt werden.

In diesem Zusammenhang sind auch Gaswäschen mit Aminen als Einsatzgebiete für das erfindungsgemäße Verfahren zu nennen, bei den z. B. Kohlendioxid oder Schwefelwasserstoff, mit wässrigen Aminlösungen aus den Gasen gewaschen werden. Ein Beispiel für eine Gaswäsche mit wässrigen Aminlösungen ist der aMDEA-Prozess der BASF, bei dem eine aktivierte wässrige Methyldiethanolamin-Lösung eingesetzt wird.

Bei der Dehydrierung von Propan zu Propen werden die Inertgase vom Propan-Propen-Gemisch durch Absorption abgetrennt, hier empfiehlt sich der Einsatz von Drahtgitterpackungen.

Im Verfahren zur Herstellung von Ethylenoxid wird die eingesetzte Pottasche-Wäsche zur Abtrennung von Kohlendioxid aus dem Reaktionsaustrag und die daran angeschlossene Aufreinigung des Ethylenoxids in Absorptions-Kolonnen durchgeführt. Hier ist die Drahtgitterpackung für den erfindungsgemäßen Einsatz geeignet.

Im Acetylenverfahren der BASF erfolgen die Acetylen-Wäsche mit N-Methyl-2-pyrolidon sowie die Rohacetylen-Reinigung durch Absorption, für die Drahtgitterpackungen erfindungsgemäß eingesetzt werden können.

Im BASF-Formaldehyd-Verfahren erfolgt die Formaldehyd-Wäsche durch Absorption, an dieser Stelle bringt der Einsatz von Drahtgitterpackungen einen Vorteil.

Ebenfalls besonders vorteilhaft ist der Einsatz des erfindungsgemäßen Verfahrens in einer anderen Ausgestaltung bei der thermischen Aufarbeitung von hochviskosen Flüssigkeiten. Unter thermischer Aufarbeitung versteht man hierbei sowohl Verfahren der Destillation, der Absorption und Desorption und der Strippung.

Bedingt durch die Bauweise der Drahtgitterpackung mit der Übergabe der Flüssigkeit aus dem Flüssigkeitsverteiler direkt auf den Draht der Packung und die nahezu senkrechte Strömungsführung an den vertikal angeordneten Drähten bietet die Drahtgitterpackung die hervorragende Voraussetzungen, hochviskose Flüssigkeiten thermisch aufzuarbeiten. Die dynamische Viskosität wird nach DIN-Norm 51562 mit einem Ubbelohde-Viskosimeter gemessen, man erhält einen Wert für die kinematische Viskosität der Flüssigkeit in der Einheit mm²/s, der dann mit der Dichte der Flüssigkeit in die dynamische Viskosität umgerechnet wird und üblicherweise in der Einheit mPa·s angegeben wird. Von viskosen Flüssigkeiten spricht man üblicherweise, wenn die dynamische Viskosität einen Wert von 20 mPa·s überschreitet, von hochviskosen Flüssigkeiten wird üblicherweise gesprochen, wenn die dynamische Viskosität einen Wert von 100 mPa·s überschreitet.

Als Beispiel für den Einsatz von Drahtgitterpackungen für die Aufarbeitung von hochviskosen Flüssigkeiten ist die Entgasung von Polymerlösungen zu nennen. Als Beispiel kann die Herstellung von Polypropylen angegeben werden. Dabei muss das Polypropylen von nicht umgesetzten Propen gereinigt werden. Dafür können Drahtgitterpackungen eingesetzt werden.

Auch bei der Herstellung von Polyethylen muss aus der Polymerlösung nicht umgesetztes Ethylen entfernt werden. Dafür können Drahtgitterpackungen verwendet werden.

Bei der Herstellung von Polyoxymethylen wird nicht umgesetztes Formaldehyd aus der Polymerlösung ausgegast. Bei der Herstellung von Polyisobuten wird das Polymer von nicht umgesetzten Isobuten entgast, außerdem werden bei der Entgasung Lösungsmittel und Nebenkomponenten, wie z. B. Oligomere, entfernt. Dafür können Drahtgitterpackungen erfindungsgemäß eingesetzt werden.

Das erfindungsgemäße Verfahren bietet eine verfahrenstechnisch einfache und effektive Art der Aufarbeitung von Stoffgemischen. Es kann Vorteilhafterweise ein relativ hoher Druck am Kopf der Kolonne eingestellt werden, ohne dass hierdurch die Qualität im Vergleich zu üblichen Verfahren beeinträchtigt wird, wodurch die Effektivität des Verfahrens nachhaltig gesteigert wird.

### Beispiel

Anhand eines Beispieles wird der Vorteil des Einsatzes einer Drahtgitterpackung bei der destillativen Aufarbeitung eines Stoffgemisches bei niedrigem Kopfdruck erläutert. Bei der Herstellung von Butyldiglykol wird das Butyldiglykol von den Schwersiedern wie z. B. Butyltriglykol und Butyltetraglykol bei einem Kopfdruck von 10 mbar abdestilliert. Dieser niedrige Kopfdruck wird gewählt, damit im Sumpf der Kolonne eine Temperatur von 160 °C nicht überschritten wird. Eine Überschreitung dieser Temperatur würde zu einer Verfärbung des Produktes von eigentlich farblos zu einer gelblichen Färbung führen. Die Aufarbeitung erfolgt bisher durch den Einsatz einer Drahtgewebepackung. Diese Packung wird in diesem Verfahren bis zu einer Gasbelastung von ca. 3 Pa^{0,5} eingesetzt. Bei einer Produktion von ca. 2400 kg/h Butyldiglykol muss die Destillationskolonne einen Durchmesser von 1,3 m haben. Die Gewebepackung hat dabei einen Druckverlust von ca. 6 mbar über die gesamte Kolonnenhöhe. Setzt man erfindungsgemäß eine Drahtgitterpackung ein, beträgt der Druckverlust über die Kolonnenhöhe nur ca. 2 mbar. Dadurch kann der Druck am Kopf der Kolonne von 10 auf 14 mbar angehoben werden, ohne das bei Einhaltung der gleichen Spezifikationen im Sumpf der Kolonne eine höhere Temperatur als 160 °C auftritt. Die Drahtgitterpackung kann außerdem mit einer Gasbelastung von ca. 6 Pa^{0,5} betrieben werden. Legt man diese Vorteile zu Grunde, hat die Destillationskolonne bei dem erfindungsgemäßen Verfahren bei der gleichen Produktqualität nur einen Durchmesser von 0,9 m, was einer Reduktion der Kolonnenfläche von 52 % entspricht und damit zu einer Steigerung der Effektivität des Verfahrens und wesentlichen Reduzierung der Investitionskosten der Kolonne führt.

## Patentansprüche

1. Verfahren zur Aufarbeitung eines Stoffgemisches in einer Kolonne, **dadurch gekennzeichnet, dass** man eine Drahtgitterpackung im Innern der Kolonne einsetzt, welche senkrecht angeordnete Drähte aufweist, an denen eine Flüssigkeit im Schwerefeld nach unten läuft und mit einem Gasstrom in entgegengesetzter Richtung in Kontakt gebracht wird, wobei man den Druck in der Kolonne am Kolonnenkopf auf einen Wert kleiner als 300 mbar einstellt.

2. Verfahren nach Anspruch 1, **dadurch gekennzeichnet, dass** man eine destillative Aufarbeitung durchführt.

3. Verfahren nach Anspruch 1 oder 2, **dadurch gekennzeichnet, dass** man die Aufarbeitung bei einem absoluten Kopfdruck kleiner als 100 mbar in der Kolonne durchführt.

4. Verfahren zur absorptiven Aufarbeitung eines Stoffgemisches in einer Kolonne, **dadurch gekennzeichnet, dass** man eine Drahtgitterpackung im Innern der Kolonne einsetzt, welche senkrecht angeordnete Drähte aufweist, an denen eine Flüssigkeit im Schwerefeld nach unten läuft und mit einem Gasstrom in entgegengesetzter Richtung in Kontakt gebracht wird.

5. Verfahren zur Aufarbeitung eines hochviskosen Stoffgemisches in einer Kolonne, **dadurch gekennzeichnet, dass** man eine Drahtgitterpackung im Innern der Kolonne einsetzt, welche senkrecht angeordnete Drähte aufweist, an denen eine Flüssigkeit im Schwerefeld nach unten läuft und mit einem Gasstrom in entgegengesetzter Richtung in Kontakt gebracht wird.

6. Verfahren nach Anspruch 5, **dadurch gekennzeichnet, dass** man Polymerlösungen entgast.
